(19) Europäisches Patentamt

European Patent Office

Office européen des brevets

(11) EP 0 432 462 B1

(12) EUROPEAN PATENT SPECIFICATION

(45) Date of publication and mention
of the grant of the patent:
**24.04.1996 Bulletin 1996/17**

(51) Int Cl.[6]: **G06T 1/40**

(21) Application number: **90121492.4**

(22) Date of filing: **09.11.1990**

(54) **Data processing system**

Datenverarbeitungssystem

Système de traitement de données

(84) Designated Contracting States:
**BE DE FR GB IT NL SE**

(30) Priority: **16.11.1989 JP 297951/89**

(43) Date of publication of application:
**19.06.1991 Bulletin 1991/25**

(73) Proprietors:
- **YOZAN INC.**
  **Tokyo 112 (JP)**
- **SHARP KABUSHIKI KAISHA**
  **Osaka 545 (JP)**

(72) Inventors:
- **Takatori, Sunao, c/o Yozan Inc.**
  **Tokyo 112 (JP)**
- **Kumagai, Ryohei, c/o Yozan Inc.**
  **Tokyo 112 (JP)**
- **Matsumoto, Koji, c/o Yozan Inc.**
  **Tokyo 112 (JP)**
- **Yamamoto, Makoto, c/o Yozan Inc.**
  **Tokyo 112 (JP)**

(74) Representative: **Grünecker, Kinkeldey,**
**Stockmair & Schwanhäusser Anwaltssozietät**
**Maximilianstrasse 58**
**D-80538 München (DE)**

(56) References cited:
- **APPLIED OPTICS, vol. 27, no. 9, 1st May 1988, pages 1752-1759, New York, US; D. PSALTIS et al.: "Adaptive optical networks using photorefractive crystals"**
- **KYBERNETIK, vol. 11, no. 3, October 1972, pages 154-156; I. MORISHITA et al.: "Analysis and simulation of networks of mutually inhibiting neurons"**

## Description

## SPECIFICATION

## FIELD OF THE INVENTION

The present invention relates to a data processing system according to the concept of a neural network.

## PRIOR ARTS

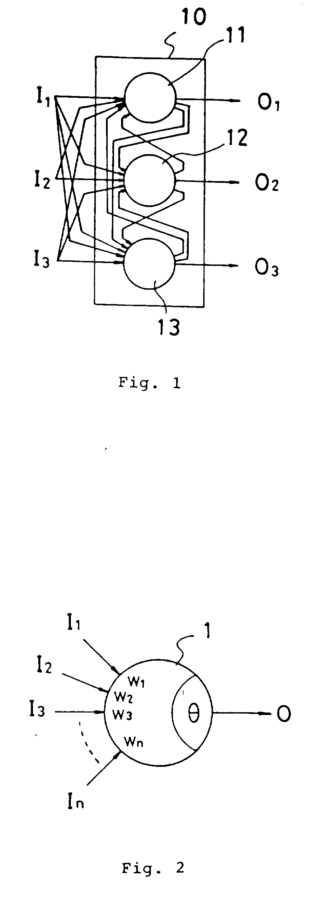

The neural network according to the data processing system of this type is constructed with layers comprising neuron model 1(hereinafter called neuron) in parallel as shown in Fig.2. According to neuron 1, data O is output in accordance with a comparison result between the sum of multiplied input data I1, I2, I3...In input from outside by weights W1, W2, W3...Wn and threshold $\theta$ .

Various comparison means are applicable. For example, when normalization function1 [ f ]is applied, output data O is expressed by:

$$O = 1 [\Sigma W_n \cdot I_n - \theta] \qquad (1)$$

Here, when $\Sigma W_n \cdot I_n$ exceeds threshold $\theta$ , O becomes "1", and when $\Sigma W_n \cdot I_n$ is smaller than threshold $\theta$ , O becomes "0".

Conventional neural network is constructed by forming the neural layers with such neurons in parallel as well as the above neural layers in series. Neurons are connected with other neurons in the other neural layer according to the neural network disclosed by, for example, "IJCNN INTERNATIONAL JOINT CONFERENCE ON NEURAL NETWORK; APPLICATIONS I, ORAL PRESENTATIONS; I- pages 401 to 405 (published in 1989)".

## SUMMARY OF THE INVENTION

According to the neural network reported at the above literature, although each of the neurons is certainly connected with other neurons, it is not clear what kind of control is performed by such connection structure of neurons. Also, the organic connection structure of the neural network has not been disclosed yet.

The present invention has an object to provide an organic connection structure of a neuron.

A data processing system according to the present invention is characterized as set out in claims 1, 2 or 3

## BRIEF DESCRIPTION OF THE DRAWINGS

Fig.1 shows a construction diagram of the 1st embodiment according to the present invention;
Fig.2 shows a schematic diagram of an example of a neuron;
Fig.3 shows the transformed circle and straight line and corrected circle and straight line;
Fig.4 shows a construction diagram of the 2nd embodiment;
Fig.5 shows a construction diagram of the 3rd embodiment;
Fig.6 shows a construction diagram of the 4th embodiment;
Fig.7 shows a construction diagram of the 5th embodiment;
Fig.8 shows a construction diagram of the 6th embodiment.

1, 11 to 104.....Neuron
10.....Neural Layer

## PREFERRED EMBODIMENT OF THE PRESENT INVENTION

Hereinafter, the present invention is described by the embodiments with referring to the attached drawings.

Fig.1 shows a part of a neural network included in a data processing system according to the lst embodiment of the present invention. This neural network is provided as a part of hardware of a computer, in which each of neurons 11, 12 and 13, consists for example of an operational amplifier. Weight Wn to be multiplied to input data of each neuron is, for example, given by variable resistance connected to input terminal of the operational amplifier. Threshold function is realized by, for example, a switching element. A learning control is performed by changing weight Wn and output data is corrected by changing the variable resistance with respect to the output data of each neuron.

Three neurons 11, 12 and 13 are prepared in parallel to one another within a neural layer 10 according to the present example. Data I1, I2 and I3 are input to each neuron, which is not shown in the figure, from neurons of the other neural layer. Then each neuron 11, 12, 13 outputs data O1, O2, O3, respectively, after the processing in accordance with the above formula (1). A control system prepared at outside, which is not shown in the figure, performs learning control by changing weight Wn of each neuron in accordance with the above output data O1, O2 and O3.

Each neuron is connected to other neurons, respectively. That is, output data O1 of neuron 11 is input to neurons 12 and 13, and output data O2 and O3 of neurons 12 and 13 are input to other neurons, respectively, as output data O1. According to each neuron, weights W1, W2 and W3 with respect to input data I1, I2 and I3 from a neuron of the previous neural layer become positive value, whereas weights W4, W5 and W6 with respect to input data O1, O2 and O3 from other neurons of the same neural layer 10 becomes negative value. According to the present embodiment, connection among neurons 11, 12 and 13 are inhibitory type, whereas connections among neurons of other neural layers are stimulation type.

The relationship among input data, weight and output data of a neuron is described, referring to the neuron 11. Output data O1 is expressed as follows in accordance with above formula (1):

$$O_1 = 1 \ [(W_1 I_1 + W_2 I_2 + W_3 I_3 + W_5 O_2 + W_6 O_3) - \theta] \ (2)$$

Here, W1, W2 and W3 take the positive values so that neuron 11 will be apt to output "1" when input data I1, I2 and I3 are "1"; in other word, it will be apt to ignite. On the other hand, since W5 and W6 take the negative value, neuron 11 becomes hard to ignite when "1" is input from neuron 12 and 13.

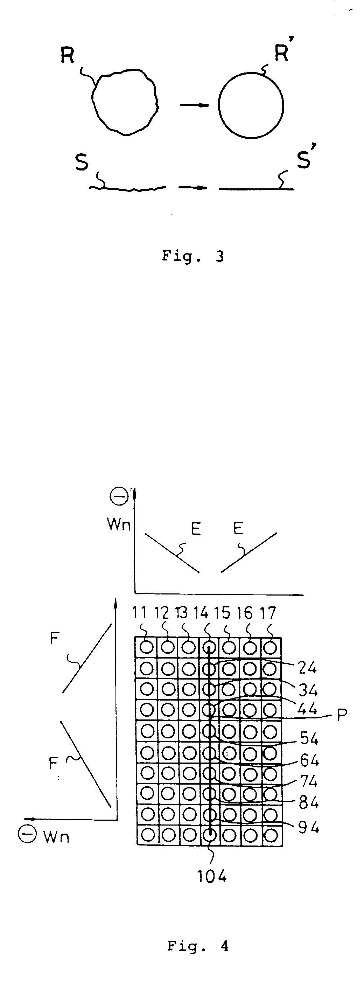

According to the above, when neurons provided in the same neural layer are connected in the inhibitory manner with one another, transformed straight line S or circle R with zigzag appearance affected by noises, for example, as shown in Fig.3 will become simply recognized as a straight line S' or circle R' as it is described later.

Fig.4 shows one neural layer in a neural network for recognizing both end points of a line. Here, an image consisting of 10 pixels in vertical direction and 7 pixels in horizontal direction is processed for easy understanding. And it is assumed that one neuron corresponds to one pixel for the simplification. Also, it is assumed that each neuron ignites ("1" is output) when a part of the line P (shown by a black line in the figure) is recognized. The above line P is recognized by neurons in the vertical direction at the center. Therefore, when this line P is taken by a video camera, for example, it is necessary to adjust the video camera so that the line P will be located at the center of an image.

As for the neurons 11 to 17 aligned in horizontal direction, input of central neuron 14 is connected with output of other neurons 11 to 13 and 15 to 17. These are the negative connections; i.e., the inhibitory type connections. Here, neurons 11 to 13 and 15 to 17 except the central neuron are not connected with one another. According to the central neuron 14, the absolute value of weight Wn (negative value) with respect to input data from the other neurons are determined to become larger in accordance with input data of further located neuron as indicated by reference E.

Therefore, central neuron 14 becomes hard to ignite due to the inhibition when a neuron apart form the central neuron recognizes a black pixel and ignites. On the other hand, when only central neuron 14 recognizes a black pixel, this neuron 14 easily ignites. As a result, when a configuration other than a straight line is projected, output pattern becomes random so as not to generate an effective output. Therefore, a straight line recognition at the latter neural layer becomes easier since an effective output is occurred with respect only to a straight line. However, an accurate line may not be obtained by only the above processing since the possibility of the ignition of a neuron is high when a black pixel exists adjacent to the center (for example, the location corresponding to that of neuron 13). According to the present embodiment, both end points of the line are extracted first, so as to obtain an accurate line by connecting the above end points as it is described hereinafter.

Accordingly, neurons 14 to 104 aligned in vertical at the center are connected with one another. According to the above neurons, the absolute value of weight Wn (negative value) with respect to input data from other neurons are determined to become larger in accordance with input data of further located neuron. Reference F in Fig.4 shows the distribution with respect to a central neuron 54. The absolute value of the weight becomes smaller rectilinearly as it closes to the neurons 14 and 104 at both ends. Therefore, the more igniting neurons exist adjacent to a neuron, the harder the neuron ignites. Contrary to the above, each neuron is hard to be influenced by neurons at a distant. As the result, neurons 14 and 104 at the location corresponding to both end point of a line become easy to be ignited, and central neuron 54 becomes hard to be ignited. Therefore, both end points are remained as the end points.

Accordingly, it is possible to obtain an expected line by connecting the above 2 points at the following neural layer.

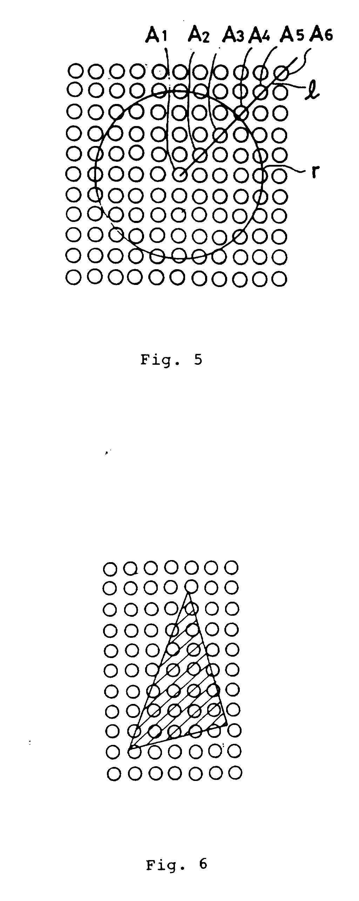

Fig.5 shows an example of the neural layer for the recognition of a circle. According to the present example, a configuration is projected on the neural layer as its center becomes a neuron A1 locating at almost the center of the neural layer.

In these neural layers except the above neural layer, a group of neurons on the same circumference centering A1, for example, a group of neurons on the circumference of a circle r are connected in feed back manner of stimulation type with one another, so as to enhance the characteristics of a circle when a configuration resemble to a circle is projected. As to a group of neurons in the radius direction with its origin of A1, for example, a group of neurons on a straight line 1 are connected in feed back manner of inhibitory type with one another, absolute values of their negative weights are set up to increase in proportion to the distances between them. That is, the negative weight of neuron A3 for A1 and A5 is greater than that of for A2 and A4. According to the above, when a configuration other than circle is projected, a large area is deleted by outputs of configuration pixels with one another. Therefore, a significant output will not be obtained.

The recognition of a circle becomes easy due to the above enhancement of a circle and an effect of the attenuation of a configuration for other configurations.

Fig.6 shows a structural example of the neural layer for the extraction of the apexes of a polygon. Each neuron is connected with all neurons of the other neural layer in inhibitory type. The absolute values of the negative weights for neurons with respect to one neuron become bigger as they are positioned nearer to the above one neuron. Therefore, with respect to a triangle, for example, neurons at outside of the triangle never ignite, and the closer the neurons inside a triangle to an apex are, the more easily the neurons ignite.

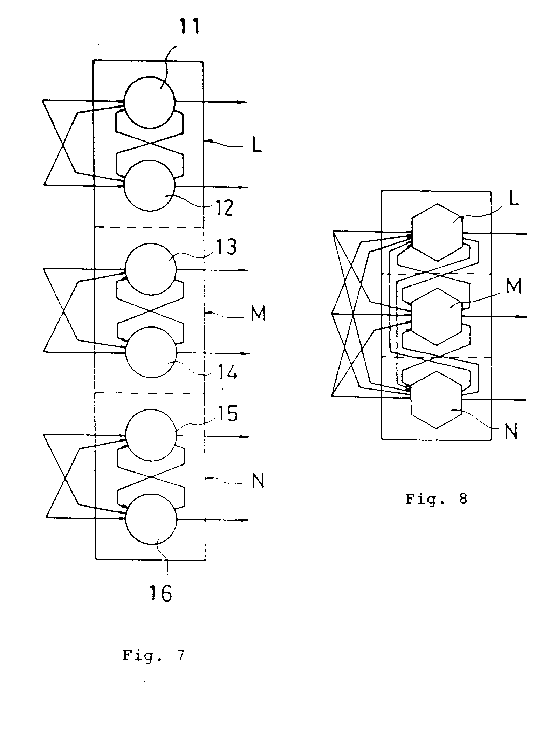

Fig.7 shows the neural network comprising 3 neural cells L, M and N by dividing neurons 11 to 16 included in a neural layer into 3. The present example shows the structure of two neurons for one neural cell for the simplification. Each neuron is connected with neurons of the same neural cell. It is not connected with neurons of the other neural cell. The selection between the inhibitory type connection and the stimulation type connection is possible according to the object.

Fig.8 shows the structure that neurons of one neural layer are divided into neural cells L, M and N. According to the present embodiment, each neural cell are connected with each other. Neurons of each neural cell are not connected with one another. As to the connection among neural cells, the selection between inhibitory type and the stimulation type is possible according to the object.

In the neural network consisting of such neural cells described in Fig.7 and Fig.8, each neural cell comprises the structure for recognizing, for example, a triangle, a rectangle and a pentagon, respectively. When data for a rectangle is input to a neural cell which recognizes a triangle, an unreasonable result, such as "3.5 apexes exist", is output. Therefore, an accurate configuration recognition becomes possible by total judgment of the output data from each neural cell.

According to the present invention, as mentioned above, it is possible to recognize a transformed configuration with different appearance form the original shape by modifying it into the accurate configuration so as to obtain an organic connection structure among neurons within a neural layer.

**Claims**

1. A data processing system of a neural network type, comprising a plurality of neural layers each of which comprises a plurality of neurons, whereby the neurons of the same neural layers are interconnected to each other by inhibitory connections,
   **characterized in that**
   the inhibitory effect caused by the connections to a particular neuron decreases as the distance between said neuron and the respective other neurons of the same layer increases.

2. A data processing system of a neural network type, comprising a plurality of neural layers each of which comprises a plurality of neurons, whereby the neurons of the same neural layers are interconnected to each other by inhibitory connections,
   **characterized in that**
   the inhibitory effect caused by the connections to a particular neuron increases as the distance between said neuron to the respective other neurons of the same layer increases.

3. A data processing system of a neural network type comprising a plurality of neural layers including a plurality of neurons in each said neural layer, said neural layers being at least in part connected to each other by inhibitory connections
   **characterized in that**
   neurons of the layer which represent an object to be recognized are connected to each other via stimulation type connections and are connected to neurons included in other neural layers via inhibitory connections.

4. A data processing system according to claim 3, wherein the inhibitory effect increases as the distance between the respective connected neurons increases.

**Patentansprüche**

1. Datenverarbeitungssystem vom neuronalen Netzwerktyp mit einer Vielzahl von neuronalen Schichten, von denen jede eine Vielzahl von Neuronen aufweist, wobei die Neuronen der gleichen neuronalen Schicht miteinander über hemmende Verbindungen verbunden sind, dadurch gekennzeichnet, daß der hemmende Effekt, der durch die Verbindungen für ein bestimmtes Neuron bewirkt wird, mit zunehmendem Abstand zwischen den Neuronen und entsprechend anderen Neuronen in der gleichen Schicht abnimmt.

2. Datenverarbeitungssystem vom neuronalen Netzwerktyp mit einer Vielzahl von neuronalen Schichten, von denen jede eine Vielzahl von Neuronen aufweist, wobei die Neuronen der gleichen neuronalen Schicht miteinander über hemmende Verbindungen verbunden sind, dadurch gekennzeichnet, daß der hemmende Effekt, der durch die Verbindungen für ein bestimmtes Neuron bewirkt wird, mit zunehmendem Abstand zwischen den Neuronen und entsprechend anderen Neuronen in der gleichen Schicht zunimmt.

3. Datenverarbeitungssystem vom neuronalen Netzwerktyp mit einer Vielzahl von neuronalen Schichten, die jeweils eine Vielzahl von Neuronen enthalten, wobei die neuronalen Schichten zumindest teilweise miteinander über hemmende Verbindungen verbunden sind, dadurch gekennzeichnet, daß die Neuronen der Schicht, die ein Objekt darstellen, welches erkannt werden soll, miteinander über stimulierende Verbindungen verbunden sind und mit Neuronen von anderen neuronalen Schichten über hemmende Verbindugen verbunden sind.

4. Datenverarbeitungssystem nach Anspruch 3, wobei der hemmende Effekt mit zunehmendem Abstand zwischen den entsprechend verbundenen Neuronen zunimmt.

## Revendications

1. Système informatique du genre réseau neuronal, comprenant plusieurs couches neuronales qui comptent chacune plusieurs neurones, par lequel les neurones d'une même couche neuronale sont interconnectés les uns aux autres par des connexions inhibitrices,

   caractérisé en ce que l'effet inhibiteur provoqué par les connexions sur un neurone particulier diminue à mesure qu'augmente la distance entre ledit neurone et les autres neurones respectifs de la même couche.

2. Système informatique du genre réseau neuronal, comprenant plusieurs couches neuronales qui comptent chacune plusieurs neurones, par lequel les neurones des mêmes couches neuronales sont interconnectés les uns aux autres par des connexions inhibitrices,

   caractérisé en ce que l'effet inhibiteur provoqué par les connexions sur un neurone particulier augmente à mesure qu'augmente la distance entre ledit neurone et les autres neurones respectifs de la même couche.

3. Système informatique du type réseau neuronal comprenant plusieurs couches neuronales se composant de plusieurs neurones dans chacune des couches neuronales, lesdites couches neuronales étant, au moins en partie, connectées les unes aux autres par des connexions inhibitrices

   caractérisé en ce que les neurones de la couche qui représentent un objet à identifier sont connectés les uns aux autres par le biais de connexions de type stimulantes et sont connectés à des neurones situés dans d'autres couches neuronales par le biais de connexions inhibitrices.

4. Système informatique selon la revendication 3, dans lequel l'effet inhibiteur augmente au fur et à mesure qu'augmente la distance entre les neurones connectés respectifs.

Fig. 1

Fig. 2

Fig. 3

Fig. 4

Fig. 5

Fig. 6

Fig. 7

Fig. 8